# EUROPÄISCHE PATENTSCHRIFT

(11) **EP 3 338 014 B1**
(45) Veröffentlichungstag und Bekanntmachung des Hinweises auf die Patenterteilung: **09.10.2019**
(21) Anmeldenummer: 16754470.9
(22) Anmeldetag: 12.08.2016
(51) Int. Cl.: F16K 31/122, F16K 31/124, F16K 31/00, F16K 1/12, F01M 1/16

(54) **ÖLKREISLAUFSYSTEM EINER BRENNKRAFTMASCHINE MIT EINEM DRUCK- UND TEMPERATURGESTEUERTEN VENTIL**
OIL CIRCUIT SYSTEM OF A COMBUSTION ENGINE WITH A PRESSURE- AND TEMPERATURE-CONTROLLED VALVE
SYSTÈME DE CIRCUIT D'HUILE D'UN MOTEUR À COMBUSTION INTERNE AVEC UNE SOUPAPE COMMANDÉE EN PRESSION ET EN TEMPÉRATURE

(30) Priorität: 19.08.2015 DE 102015215774
(43) Veröffentlichungstag der Anmeldung: 27.06.2018
(73) Patentinhaber: Mahle International GmbH, 70376 Stuttgart (DE)
(72) Erfinder: DUNSCH, Robert, 71665 Vaihingen (DE); SAUPE, Kai, 71032 Böblingen (DE)
(74) Vertreter: BRP Renaud & Partner mbB Rechtsanwälte Patentanwälte Steuerberater
(86) Internationale Anmeldenummer: PCT/EP2016/069262
(87) Internationale Veröffentlichungsnummer: WO 2017/029227

(56) Entgegenhaltungen:
- EP-A1- 2 816 206
- WO-A1-02/090807
- WO-A1-2009/015529
- DE-A1- 3 912 118
- DE-A1-102009 023 824
- US-A1- 2010 122 746

## Beschreibung

Die vorliegende Erfindung betrifft ein Ölkreislaufsystem einer Brennkraftmaschine mit einem druck- und temperaturgesteuerten Ventil.

Zur Ansteuerung eines Ölkühlers in einem Ölkreislauf einer Brennkraftmaschine wird in der Regel ein sogenanntes Thermostatventil verwendet. Klassische Thermostatventile werden dabei über Dehnstoffelemente, wie beispielsweise Wachsdehnstoffelemente, geschaltet.

Aus der DE 20 26 629 U ist ein Temperaturregelventil bekannt, welches mittels eines solchen Temperaturdehnelements gesteuert wird.

Aus der DE 102 61 180 A1 ist eine temperaturgeregelte Ölspritzdüse zur Kolbenkühlung mit einem Regelventil bekannt, welches ein einer Steueröffnung zugeordnetes Steuerglied aufweist, das über ein erstes Stellteil in eine die Steueröffnung verschließenden Endlage vorgespannt ist und über ein zweites Stellteil entgegengesetzt vorgespannt und in eine geöffnete Stellung bringbar ist. Die durch ein Schmiermittel über die Steueröffnung auf das Steuerglied wirkende Drucckraft, wirkt dabei senkrecht zur Bewegungsrichtung des Steuerglieds. Hierdurch soll ein besonders einfacher Aufbau erreicht werden können.

Nachteilig bei den aus dem Stand der Technik bekannten Ventilen ist jedoch, dass diese durch die Verwendung von bekannten Dehnstoffelementen vergleichsweise lange Schaltzeiten aufweisen und dadurch zum schnellen Schalten ungeeignet sind. Aus dem Stand der Technik sind anstelle der bekannten Dehnstoffelemente selbstverständlich auch sogenannte Formgedächtnislegierungen bekannt, die zwar einerseits ein vergleichsweise schnelles Schalten ermöglichen, andererseits jedoch aufgrund von lediglich geringen aufbringbaren Stellkräften dementsprechend groß ausgebildet werden müssen und dadurch vergleichsweise teuer sind, wodurch wiederum ein Nachteil entsteht.

Die DE 10 2009 023 824 A offenbart ein Ölkreislaufsystem einer Brennkraftmaschine mit einem druck- und temperaturgesteuerten Ventil gemäß dem Oberbegriff von Anspruch 1.

Die EP 2 816 206 A1 offenbart eine Düse zum Ausstoßen einer Kühlflüssigkeit in Richtung eines Kolbens eines Verbrennungsmotors eines Fahrzeugs.

Die vorliegende Erfindung beschäftigt sich daher mit dem Problem, für ein druck- und temperaturgesteuertes Ventil eine verbesserte Ausführungsform anzugeben, welche sich sowohl durch geringe Schaltzeiten als auch durch geringe Kosten auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die vorliegende Erfindung beruht auf dem allgemeinen Gedanken, zur Steuerung eines druck- und temperaturgesteuerten Ventils in einem Ölkreislauf einer Brennkraftmaschine ein Bimetallelement oder ein, eine Formgedächtnislegierung aufweisendes Schaltelement, einzusetzen, hierüber jedoch nicht direkt ein Ventilelement zu schalten, sondern lediglich einen Zufluss in einen Zylinder, über welchen ein als druckgesteuerter Kolben ausgebildetes Ventilelement bewegt werden kann. Durch den Umstand, dass bei der erfindungsgemäßen Lösung lediglich eine Zulauföffnung zum Druckraum von dem jeweiligen Bimetallelement bzw. Schaltelement geöffnet bzw. zu geschlossen werden muss, kann dieses vergleichsweise klein und damit auch kostengünstig ausgebildet werden, da die eigentliche Verstellung des Ventilelements durch den Druck im Zylinder erfolgt. Das erfindungsgemäße druck- und temperaturgesteuerte Ventil, welches in einem Ölkreislauf einer Brennkraftmaschine angeordnet sein kann, weist dabei einen druckgesteuerten Kolben auf, der in dem zuvor beschriebenen Zylinder translatorisch verstellbar ist und in einer ersten Stellung von einem Ventilsitz abgehoben ist und dadurch einen Durchfluss durch das Ventil ermöglicht, während der Kolben in einer zweiten Stellung mit einem Ventilkopf auf den Ventilsitz gedrückt ist und dadurch das Ventil verschließt. Der Kolben unterteilt dabei den Zylinder in einen Druckraum und einen Gegendruckraum, wobei in dem Gegendruckraum eine Rückstellfeder angeordnet ist. Erfindungsgemäß weist nun der Druckraum die zuvor beschriebene Zulauföffnung auf, die temperaturabhängig von einem Bimetallelement oder einem, eine Formgedächtnislegierung aufweisenden Schaltelement verschließbar und zu öffnen ist. Beträgt somit beispielsweise die Öltemperatur weniger als 80 °C, so befindet sich das Bimetallelement bzw. das Schaltelement in seiner die Zulauföffnung verschließenden Ausgangslage, wodurch der Druckraum nicht mit einem entsprechenden Öldruck beaufschlagt wird, der zu einem Verstellen des Kolbens in seine zweite Stellung führt. Vielmehr bewirkt in diesem Zustand die im Gegendruckraum angeordnete Rückstellfeder, dass der Kolben in seine erste Stellung zurückgefahren wird und dadurch der Ventilkopf vom Ventilsitz abhebt und das Ventil öffnet. Steigt die Temperatur auf bzw. über eine für das Bimetallelement bzw. das Schaltelement kritische Grenztemperatur, beispielsweise 80 °C, springt dieses schlagartig um und öffnet die Zulauföffnung zum Druckraum, woraufhin der Druckraum mit von einer Ölpumpe gefördertem Öl beaufschlagt wird, was zu einem Verstellen des Kolbens in seine zweite Stellung und damit zu einem Schließen des Ventils führt. Selbstverständlich muss dabei das Ventil nicht komplett verschlossen werden, sondern kann bei geringerem Druck des Öls auch nur teilweise geschlossen werden. Ein derartiges druck- und temperaturgesteuertes Ventil kann beispielsweise an einer Abzweigung stromab der Ölpumpe und stromauf eines Ölkühlers angeordnet werden, wobei bei geöffnetem Ventil ein Teilölstrom zu einer Filtereinrichtung geleitet wird. Steigt die Temperatur des Öls über die zuvor definierte Grenztemperatur, schließt das Ventil zumindest teilweise, so dass zumindest ein Teil des oder der gesamte Ölstrom nun über den Ölkühler geleitet und dort gekühlt wird. Mit dem erfindungsgemäßen druck- und temperaturgesteuerten Ventil ist es somit möglich, einerseits ein extrem schnell, d.h. nahezu schlagartig, schaltbares Ventil zu konzipieren, welches andererseits aufgrund eines lediglich kleine Stellkräfte erforderlichen Bimetallelements bzw. Schaltelements kostengünstig ausgebildet werden kann.

Bei einer vorteilhaften Weiterbildung der erfindungsgemäßen Lösung beträgt eine Schalttemperatur (Grenztemperatur) des Bimetallelements oder des Schaltelements ca. 80°C. Bei ca. 80 °C ist es zur Erhaltung der Schmierkraft des Öls erforderlich, einen weiteren Temperaturanstieg nach Möglichkeit zu verhindern, so dass in diesem Fall eine verstärkte Kühlung des Öls erfolgen sollte. Zu diesem Zweck schließt das erfindungsgemäße Ventil bei ca. 80 °C, woraufhin der gesamte Ölstrom über den Ölkühler geleitet wird.

Bei einer weiteren vorteilhaften Ausführungsform der erfindungsgemäßen Lösung weist der Kolben einen kegelstumpfförmigen Ventilkopf auf, während der Ventilsitz eine Konusfläche aufweist, die komplementär zum Ventilkopf ausgebildet ist. Hierdurch kann ein besonders strömungsgünstiges Ventil geschaffen werden, wobei der Kolben und der Druckraum zentral in dem Ventil angeordnet sind und ringförmig vom das Ventil durchströmenden Öl umströmt werden.

Zweckmäßig weisen das Bimetallelement oder das Schaltelement eine kreisscheibenartige Form auf. Eine derartige kreisscheibenartige Form besitzt das besagte Bimetallelement bzw. das Schaltelement selbstverständlich lediglich in einem Ausgangszustand, in welchem es in dieser Gestalt vom Öldruck gegen die Zulauföffnung des Druckraums gepresst wird und dadurch die Zulauföffnung verschließt. Durch die geschlossene Zulauföffnung verbleibt der Kolben aufgrund der Rückstellkraft der im Gegendruckraum angeordneten Rückstellfeder in seiner das Ventil öffnenden Stellung, wodurch das seitens einer Ölpumpe geförderte Öl das Ventil durchströmen und zu einer Filtereinrichtung geführt werden kann. Ist die Grenztemperatur bzw. Schalttemperatur erreicht, so verformt sich das kreisscheibenartige Bimetallelement oder das Schallelement zu einer kugelsegmentartigen Gestalt und öffnet dadurch die Zulauföffnung. In gleicher Weise kann selbstverständlich das Bimetallelement bzw. das Schaltelement auch rechteckig oder streifenförmig ausgebildet sein.

Die vorliegende Erfindung beruht weiter auf dem allgemeinen Gedanken, ein Ölkreislaufsystem einer Brennkraftmaschine mit einem solchen, zuvor beschriebenen druck- und temperaturgesteuerten Ventil auszustatten. Hierdurch kann ein Ölstrom vergleichsweise schnell, nämlich beim Erreichen der Schalttemperatur, umgelenkt werden, so dass er beim Erreichen oder Überschreiten der Schalttemperatur nicht nur über eine Filtereinrichtung, sondern hauptsächlich oder ausschließlich über den Ölkühler geleitet wird. Das Ventil ist hierzu ausgangsseitig mit der Filtereinrichtung und eingangsseitig mit einem Ausgang einer Ölpumpe verbunden.

Erfindungsgemäß ist der Gegendruckraum des Ventils mit einem Kurbelgehäuse verbunden, so dass im Gegendruckraum derselbe Druck p herrscht, wie im Kurbelgehäuse. Die das Ventil öffnende Kraft wird somit im Gegendruckraum nicht nur von der dort angeordneten Rückstellfeder bewirkt, sondern zusätzlich auch vom Druck im Kurbelgehäuse. Der Druck im Gegendruckraum ist beim Ventilschließen kleiner und beim Ventilöffnen gleich groß wie im Druckraum. Um einen Druckausgleich zwischen dem Druckraum und dem Gegendruckraum erreichen zu können, wird auch eine definierte Leckage am Zylinderdichtsitz, das heißt zwischen dem Zylinder und dem Kolben benötigt. Hier erfolgt der Druckabbau bei verschlossener Zulauföffnung, so dass die Rückstellfeder den Kolben bewegen und das Ventil öffnen kann. Die Schalttemperatur kann zwischen 60 und 130°C liegen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen, jeweils schematisch,
- Fig. 1: ein erfindungsgemäßes druck- und temperaturgesteuertes Ventil mit einem Bimetall in einer ersten Stellung,
- Fig. 2: eine Darstellung wie in Fig. 1, jedoch in einer zweiten Stellung,
- Fig. 3: eine Darstellung wie in Fig. 1, jedoch mit einem, eine Formgedächtnislegierung aufweisenden Schaltelement,
- Fig. 4: eine Darstellung wie in Fig. 3, jedoch in einer zweiten Stellung.

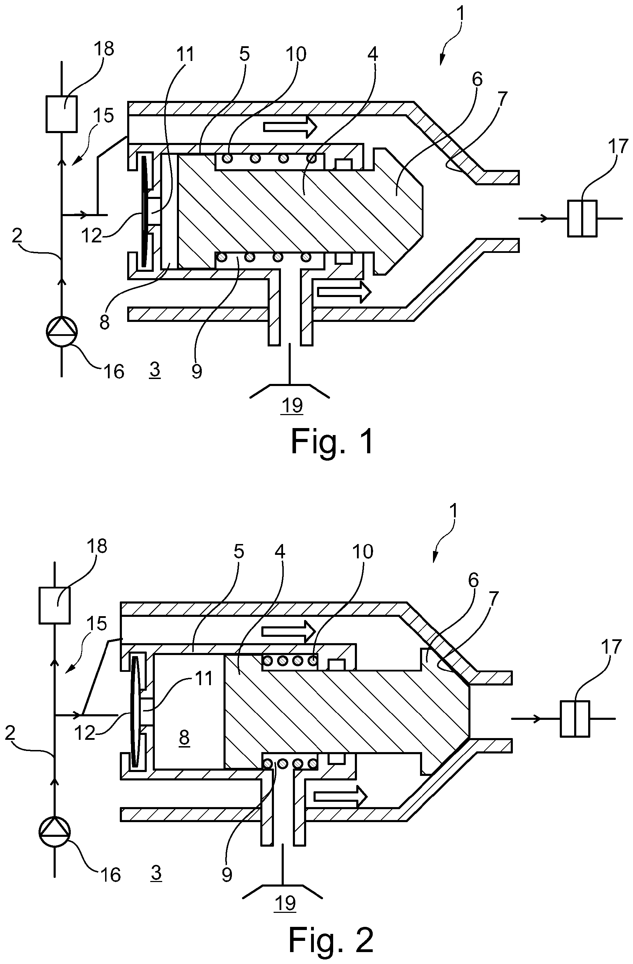

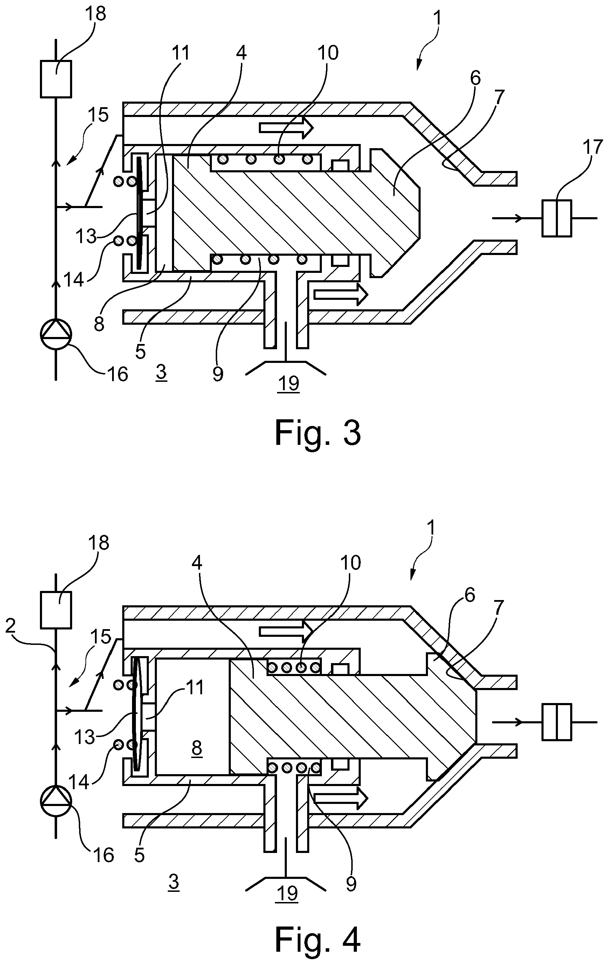

Entsprechend den Fig. 1 bis 4, weist ein druck- und temperaturgesteuertes Ventil 1, welches in einem Ölkreislauf 2 einer Brennkraftmaschine 3 angeordnet ist, einen druckgesteuerten Kolben 4 auf, der in einem Zylinder 5 translatorisch verstellbar gelagert ist. Der Kolben 4 ist dabei zwischen einer ersten Stellung (vgl. die Fig. 1 und 3) und einer zweiten Stellung (vgl. die Fig. 2 und 4) verstellbar, wobei ein mit dem Kolben 4 verbundener Ventilkopf 6 in der ersten Stellung von einem zugehörigen Ventilsitz 7 abgehoben und dadurch das Ventil 1 geöffnet ist (vgl. Fig. 1 und 3), während der Kolben 4 einer zweiten Stellung mit dem Ventilkopf 6 auf dem Ventilsitz 7 aufliegt und dadurch das Ventil 1 verschließt (vgl. Fig. 2 und 4). Der Kolben 4 unterteilt dabei den Zylinder 5 in einen Druckraum 8 und einen Gegendruckraum 9, wobei in letzterem eine Rückstellfeder 10 angeordnet ist. Ein Volumen des Druckraums 8 bzw. des Gegendruckraums 9 ist dabei abhängig von der Stellung des Kolbens 4. Erfindungsgemäß weist nun der Druckraum 8 eine Zulauföffnung 11 auf, die temperaturabhängig von einem Bimetallelement 12 (vgl. die Fig. 1 und 2) oder einem, eine Formgedächtnislegierung aufweisenden Schaltelement 13 (vgl. die Fig. 3 und 4) verschließbar und öffenbar ist.

Das vorliegende erfindungsgemäße Ventil 1 bietet dabei den großen Vorteil, aufgrund des Bimetallelements 12 bzw. des Schaltelements 13 ein Öffnen bzw. Schließen des Ventils 1 vergleichsweise schnell, insbesondere sogar schlagartig bewirken zu können, und dabei trotzdem vergleichsweise kostengünstig ausgebildet werden zu können, da das Bimetallelement 12 bzw. das Schaltelement 13 lediglich zum Öffnen bzw. Schließen der Zulauföffnung 11 verwendet wird und dadurch nahezu keine Stellkräfte aufbringen muss und deshalb klein ausgebildet werden kann.

Betrachtet man das erfindungsgemäße Ventil 1 gemäß den Fig. 3 und 4, so kann man erkennen, dass zur Rückstellung des Schaltelements 13 eine Federeinrichtung 14 vorgesehen ist, die das Schaltelement 13 bei Unterschreiten einer vordefinierten Temperatur, insbesondere einer Schalttemperatur, in eine die Zulauföffnung 11 schließende Lage (vgl. Fig. 3) vorspannt. Die Schalttemperatur des Bimetallelements 12 bzw. des Schaltelements 13 kann dabei beispielsweise 80 °C betragen.

Betrachtet man den Kolben 4 näher, so kann man erkennen, dass dieser den besagten kegelstumpfförmigen Ventilkopf 6 aufweist, wobei der Ventilsitz 7 eine Konusfläche besitzt, die komplementär zum Ventilkopf 6 ausgebildet ist. Das Bimetallelement 12 bzw. das Schaltelement 13 wiederum besitzt vorzugsweise eine kreisscheibenartige Gestalt, kann aber alternativ auch streifen- oder rechteckförmig ausgebildet sein.

Eingebettet ist das erfindungsgemäße Ventil 1 in ein Ölkreislaufsystem 15 der Brennkraftmaschine 3, wobei das Ventil 1 und insbesondere dessen Druckraum 8 eingangsseitig, abhängig natürlich vom Schaltzustand des Bimetallelements 12 bzw. des Schaltelements 13, mit einem Ausgang einer Ölpumpe 16 verbunden sind. Ausgangsseitig ist das Ventil 1 mit einer Filtereinrichtung 17 verbunden.

Betrachtet man das erfindungsgemäße Ventil 1 in Abhängigkeit seiner Schaltstellungen, so kann man erkennen, dass bei einem sich in seiner ersten Stellung befindlichen Kolben 4 das Ventil 1 geöffnet ist (vgl. die Fig. 1 und 3), so dass ein von der Ölpumpe 16 geförderter Ölstrom zwischen einem Ölkühler 18 und der Filtereinrichtung 17 aufgeteilt wird. Eine derartige Aufteilung von der Ölpumpe 16 geförderten Ölstroms erfolgt dabei bis zu der zuvor genannten Grenztemperatur bzw. Schalttemperatur des Bimetallelements 12 bzw. des Schaltelements 13. Wird die Schalttemperatur erreicht bzw. überschritten, so öffnet das Bimetallelement 12 bzw. das Schaltelement 13 die Zulauföffnung 11, woraufhin der Druckraum 8 mit dem von der Ölpumpe 16 erzeugten Öldruck beaufschlagt wird, wodurch sich der Kolben 4 in seine zweite Stellung (vgl. Fig. 2 und 4) oder öldruckabhängig zumindest in Richtung der zweiten Stellung verstellt und dadurch das Ventil 1 zumindest teilweise schließt. In der zweiten Stellung strömt nun der seitens der Ölpumpe 16 geförderte Ölstrom nicht mehr über die Filtereinrichtung 17, sondern ausschließlich über den Ölkühler 18, bis die Temperatur des Öls wieder unter die Grenztemperatur bzw. unter die Schalttemperatur des Bimetallelements 12 bzw. des Schaltelements 13 fällt und dadurch das Ventil 1 wieder öffnet.

Selbstverständlich kann durch ein lediglich teilweises Schließen des Ventils 1 auch nur ein größerer Teilölstrom über den Ölkühler 18 geschickt werden.

Betrachtet man die Fig. 1 bis 4 weiter, so kann man erkennen, dass der Gegendruckraum 9 mit einem Kurbelgehäuse 19 verbunden ist, so dass im Gegendruckraum 9 derselbe Druck p herrscht, wie im Kurbelgehäuse 19. Eine Öffnungsbewegung des Ventils 1 wird somit sowohl durch die Rückstellfeder 10 als auch durch den im Kurbelgehäuse 19 herrschenden Druck p unterstützt. Eine Schließbewegung des Ventils 1 bzw. dessen Kolben 4 erfolgt somit durch den seitens der Ölpumpe 16 erzeugten Öldruck entgegen der Stellkraft der Rückstellfeder 10 sowie entgegen des im Kurbelgehäuse 19 herrschenden Drucks p. Der Druck im Gegendruckraum 9 ist beim Ventilschließen kleiner und beim Ventilöffnen gleich groß wie im Druckraum 8. Um einen Druckausgleich zwischen dem Druckraum 8 und dem Gegendruckraum 9 erreichen zu können, wird auch eine definierte Leckage am Zylinderdichtsitz, das heißt zwischen dem Zylinder 5 und dem Kolben 4, benötigt. Hier erfolgt der Druckabbau bei verschlossener Zulauföffnung 11, so dass die Rückstellfeder 10 den Kolben 4 bewegen und das Ventil 1 öffnen kann. Ein Öffnen des Ventils 1 kann demnach nur dann erfolgen, sofern eine aus Druck im Gegendruckraum 9 und Rückstellfeder 10 resultierende Kraft größer ist als die aus dem Druck im Druckraum 8 resultierende Kraft. Durch die Leckagemöglichkeit am Zylindersitz kann ein Druckausgleich zwischen Druckraum 8 und Gegendruckraum 9 erreicht und der Kolben 4 aufgrund der Rückstellkraft der Rückstellfeder 10 in seine Öffnungsstellung verstellt werden. Die Schalttemperatur kann zwischen 60 und 130 °C, vorzugsweise bei ca. 80 °C, liegen.

Mit dem erfindungsgemäßen Ölkreislaufsystem ist es somit möglich, die Vorteile eines schnellen, insbesondere sogar schlagartig, schaltenden Ventils 1 mit den Vorteilen eines kostengünstigen Ventils 1 zu kombinieren, wodurch erhebliche Vorteile im Vergleich zu bisher aus dem Stand der Technik bekannten Ventilen, welche mittels beispielsweise Wachsdehnstoffelementen geschaltet wurden, erzielt werden können. Der Erfindungsgedanke liegt hierbei insbesondere darin, das zum Schalten des Ventils 1 erforderliche Bimetallelement 12 bzw. Schaltelement 13 nicht direkt zum Verstellen des Kolbens 4 zu verwenden, wozu vergleichsweise hohe Stellkräfte und damit auch ein großes und teures Bimetallelement 12 bzw. Schaltelement 13 erforderlich wäre, sondern lediglich zum Öffnen bzw. Schließen der Zulauföffnung 11 des Druckraums 8, wodurch das Bimetallelement 12 bzw. das Schaltelement 13 vergleichsweise klein und damit kostengünstig ausgebildet werden kann.

## Patentansprüche

1. Ölkreislaufsystem (15) einer Brennkraftmaschine (3) mit einem druck- und temperaturgesteuerten Ventil (1), das Ventil (1) aufweisend
- einen druckgesteuerten Kolben (4), der in einem Zylinder (5) translatorisch verstellbar gelagert ist und in einer ersten Stellung von einem Ventilsitz (7) abgehoben ist und dadurch einen Durchfluss durch das Ventil (1) ermöglicht, während der Kolben (4) in einer zweiten Stellung mit einem Ventilkopf (6) auf den Ventilsitz (7) gedrückt ist und das Ventil (1) verschließt,
**dadurch gekennzeichnet**,
- dass der Kolben (4) den Zylinder (5) in einen Druckraum (8) und einen Gegendruckraum (9) unterteilt,
- dass in dem Gegendruckraum (9) eine Rückstellfeder (10) angeordnet ist,
- dass der Druckraum (8) eine Zulauföffnung (11) aufweist, die temperaturabhängig von einem Bimetallelement (12) oder einem, eine Formgedächtnislegierung aufweisenden Schaltelement (13) verschließbar und öffenbar ist,
- dass der Gegendruckraum (9) des Ventils (1) mit einem Kurbelgehäuse (19) verbunden ist, sodass im Gegendruckraum (9) derselbe Druck p herrscht, wie im Kurbelgehäuse (19).

2. Ölkreislaufsystem nach Anspruch 1 mit einem druck- und temperaturgesteuerten Ventil entsprechend der zweiten Alternative,
**dadurch gekennzeichnet,**
**dass** eine Federeinrichtung (14) vorgesehen ist, die das Schaltelement (13) bei Unterschreiten einer vordefinierten Temperatur in eine die Zulauföffnung (11) schließende Lage vorspannt.

3. Ölkreislaufsystem nach Anspruch 1 oder 2,
**dadurch gekennzeichnet,**
**dass** eine Schalttemperatur des Bimetallelements (12) oder des Schaltelements (13) zwischen 60 °C und 130 °C, vorzugsweise bei ca. 80 °C liegt.

4. Ölkreislaufsystem nach einem der vorhergehenden Ansprüche,
**dadurch gekennzeichnet,**
- **dass** der Kolben (4) einen kegelstumpfförmigen Ventilkopf (6) aufweist,
- **dass** der Ventilsitz (7) eine Konusfläche aufweist, die komplementär zum Ventilkopf (6) ausgebildet ist.

5. Ölkreislaufsystem nach einem der vorhergehenden Ansprüche,
**dadurch gekennzeichnet,**
**dass** das Bimetallelement (12) oder das Schaltelement (13) eine kreisscheibenartige Form aufweisen.

6. Ölkreislaufsystem nach einem der vorhergehenden Ansprüche,
**dadurch gekennzeichnet,**
**dass** das Ventil (1) und insbesondere der Druckraum (8) eingangsseitig mit einem Ausgang einer Ölpumpe (16) verbunden sind.

7. Ölkreislaufsystem nach einem der vorhergehenden Ansprüche,
**dadurch gekennzeichnet,**
**dass** das Ventil (1) ausgangsseitig mit einer Filtereinrichtung (17) verbunden ist.

## Claims

1. Oil circuit system (15) of a combustion engine (3) with a pressure- and temperature-controlled valve (1), the valve (1) having
- a pressure-controlled piston (4), which is mounted in a translationally adjustable manner in a cylinder (5) and in a first position is raised from a valve seat (7) and thereby allows a through-flow through the valve (1), while the piston (4) in a second position is pressed with a valve head (6) onto the valve seat (7) and closes the valve (1),
**characterised in**
- **that** the piston (4) separates the cylinder (5) into a pressure chamber (8) and a counterpressure chamber (9),
- **that** in the counterpressure chamber (9) is disposed a reset spring (10),
- **that** the pressure chamber (8) has a feed opening (11) which can be closed and opened in a temperature-dependent manner by a bimetallic element (12) or a switch element (13) having a shape memory alloy,
- **that** the counterpressure chamber (9) of the valve (1) is connected with a crankcase (19) such that in the counterpressure chamber (9) the same pressure p prevails as in the crankcase (19).

2. Oil circuit system according to claim 1 having a pressure- and temperature-controlled valve corresponding to the second alternative,
**characterised in**
**that** a spring device (14) is provided which, when a predefined temperature is undershot, pretensions the switch element (13) into a position closing the feed opening (11).

3. Oil circuit system according to claim 1 or 2,
**characterised in**
**that** a switch temperature of the bimetallic element (12) or of the switch element (13) is between 60°C and 130°C, preferably at approximately 80°C.

4. Oil circuit system according any of the preceding claims,
**characterised in**
- **that** the piston (4) has a frustoconical valve head (6),
- **that** the valve seat (7) has a conical surface which is formed in a complementary manner to the valve head (6).

5. Oil circuit system according to any of the preceding claims,
**characterised in**
**that** the bimetallic element (12) or the switch element (13) have a circular discshaped form.

6. Oil circuit system according to any of the preceding claims,
**characterised in**
**that** the valve (1) and in particular the pressure chamber (8) are connected on the inlet side with an outlet of an oil pump (16).

7. Oil circuit system according to any of the preceding claims,
**characterised in**
**that** the valve (1) is connected on the outlet side with a filter device (17).

## Revendications

1. Système de circuit d'huile (15) d'un moteur à combustion interne (3) avec une soupape (1) à pression et température commandées, la soupape (1) présentant
- un piston (4) à pression commandée, qui est monté de manière à pouvoir être ajusté par translation dans un cylindre (5) et est soulevé dans une première position d'un siège de soupape (7) et permet ainsi un écoulement à travers la soupape (1) alors que le piston (4) est poussé sur le siège de soupape (7) dans une deuxième position avec une tête de soupape (6) et ferme la soupape (1),
**caractérisé en ce**
- **que** le piston (4) divise le cylindre (5) en un espace de pression (8) et en un espace de contre-pression (9),
- **qu'**un ressort de rappel (10) est disposé dans l'espace de contre-pression (9),
- **que** l'espace de pression (8) présente une ouverture d'amenée (11), qui peut être fermée et ouverte en fonction de la température par un élément bimétallique (12) ou un élément de commutation (13) présentant un alliage à mémoire de forme,
- **que** l'espace de contre-pression (9) de la soupape (1) est relié à un carter de vilebrequin (19) de sorte que la même pression p règne dans l'espace de contre-pression (9) que dans le carter de vilebrequin (19).

2. Système de circuit d'huile selon la revendication 1 avec une soupape à pression et température commandées conformément à la deuxième alternative,
**caractérisé en ce**
**qu'**un système de ressort (14) est prévu, qui précontraint l'élément de commutation (13) dans une position fermant l'ouverture d'amenée (11) lorsqu'une température prédéfinie n'est pas atteinte.

3. Système de circuit d'huile selon la revendication 1 ou 2,
**caractérisé en ce**
**qu'**une température de commutation de l'élément bimétallique (12) ou de l'élément de commutation (13) se situe entre 60 °C et 130 °C, de préférence est de l'ordre d'environ 80 °C.

4. Système de circuit d'huile selon l'une quelconque des revendications précédentes,
**caractérisé en ce**
- **que** le piston (4) présente une tête de soupape (6) en forme de cône tronqué,
- **que** le siège de soupape (7) présente une face conique, qui est réalisée de manière complémentaire à la tête de soupape (6).

5. Système de circuit d'huile selon l'une quelconque des revendications précédentes,
**caractérisé en ce**
**que** l'élément bimétallique (12) ou l'élément de commutation (13) présente une forme de type disque circulaire.

6. Système de circuit d'huile selon l'une quelconque des revendications précédentes,
**caractérisé en ce**
**que** la soupape (1) et en particulier l'espace de pression (8) sont reliés côté entrée à une sortie d'une pompe à huile (16).

7. Système de circuit d'huile selon l'une quelconque des revendications précédentes,
**caractérisé en ce**
**que** la soupape (1) est reliée côté sortie à un dispositif de filtration (17).
